# EUROPÄISCHE PATENTANMELDUNG

(11) **EP 1 637 434 A2**
(43) Veröffentlichungstag der Anmeldung: **22.03.2006**
(21) Anmeldenummer: 05014357.7
(22) Anmeldetag: 01.07.2005
(51) Int. Cl.: B62D 5/00, B62D 5/06

(54) **Hydraulische Lenkvorrichtung für ein Kraftfahrzeug**

(30) Priorität: 17.09.2004 DE 102004045091
(71) Anmelder: AUDI AG, 85045 Ingolstadt (DE)
(72) Erfinder: Laurijssen, Daniel, 85055 Ingolstadt (DE); Michel, Wilfried, 93339 Riedenburg (DE)
(74) Vertreter: Asch, Konrad

(57) **Zusammenfassung**

Hydraulische Lenkvorrichtung für ein Kraftfahrzeug, bestehend aus einer mit dem Lenkrad (2) verbundenen Lenksäule (3), welche mittels eines hydraulischen Lenkventils (5) und wahlweise mindestens einer Überlagerungseinrichtung (4) mit einem hydraulischen Lenkgetriebe (6) trieblich verbunden ist, welches ein mit einer Zahnstange (62) in Eingriff angeordnetes Zahnritzel (61) besitzt. Es ist eine fertigungstechnisch günstige Anordnung von Lenkventil (5) und wahlweise mindestens einer Überlagerungsvorrichtung (4) und zugleich eine vereinfachte Montagemöglichkeit gesucht. Die Aufgabe wird dadurch gelöst, dass ein hydraulisches Lenkventil (5) mit oder ohne einer oder mehrerer Überlagerungseinrichtungen (4) in der Lenksäule (3), baulich beabstandet vom Lenkgetriebe (6), angeordnet ist bzw. sind.

## Beschreibung

Die Erfindung betrifft eine hydraulische Lenkvorrichtung für ein Kraftfahrzeug gemäß dem Oberbegriff des Anspruches 1.

Bekannt sind in Kraftfahrzeugen hydraulisch unterstützende Hilfskraftlenkungen, die beispielsweise als Zahnstangenlenkung (Zahnstangen-Hydrauliklenkung) ausgeführt sein können.

Das hydraulische Lenkventil als Hilfskrafteinrichtung sitzt dabei in der Regel zwischen dem unteren Ende der Lenksäule und dem Antriebsritzel der Zahnstange. Das hydraulische Lenkventil ist in der Regel als separate Funktionseinheit an dem Hauptgehäuse des Lenkgetriebes angeflanscht und trieblich verbunden.

In Weiterentwicklung einer solchen Lenkvorrichtung sind auch ein Momentensteller mit elektrischem Antrieb bekannt, der die Handhabung der **Lenkvorrichtung verbessert.**

Ferner ist auch ein Lenkwinkelsteller mit einem Elektromotor und einem Überlagerungsgetriebe bekannt geworden, der in die Lenksäule integriert, der manuellen Lenkbewegung des Fahrers eine zusätzliche Lenkbewegung überlagert.

Momentensteller und Lenkwinkelsteller sind Überlagerungseinrichtungen.

Somit sind am Gehäuse für das Lenkgetriebe in der Regel auch das Gehäuse beispielsweise des Momentenstellers und/oder Lenkwinkelstellers angeordnet. Es ist bekannt, dass beispielsweise in koaxialer Anordnung von Lenkventil und Momentensteller deren Gehäuse mit dem Gehäuse des Lenkgetriebes verbunden sind. Dabei besteht natürlich eine triebliche Verbindung zwischen Hilfskrafteinrichtung (Lenkventil) und Überlagerungseinrichtung (Lenkwinkelsteller und/oder Momentensteller) und Lenkgetriebe. Lenkventil und Momentensteller und/oder Lenkwinkelsteller bilden eine Anordnung, welche bekannterweise mit dem Lenkgetriebe baulich und trieblich verbunden ist.
Die Anbindung der Lenk-Hilfseinrichtung an dem Lenkgetriebe vermindert in diesem Bereich den nutzbaren Bauraum aufgrund raumgreifender Ausbildung am Getriebe. Werden dann noch zusätzlich Überlagerungseinrichtungen (Momentensteller und/oder Lenkwinkelsteller) verbaut, wird der Bauraum zusätzlich eingeschränkt.

Aufgabe der Erfindung ist es, eine hydraulische Lenkvorrichtung der gattungsgemäßen Art vorzuschlagen, die aufgrund eines beengten Bauraumes im Bereich des Getriebes dennoch eine fertigungstechnisch günstige Anordnung von Hilfskrafteinrichtung mit oder ohne einer oder mehrerer Überlagerungseinrichtungen ermöglicht und eine vereinfachte Montage am Kraftfahrzeug gestattet. Es ist eine bevorzugte Anordnung der Lenkvorrichtung angegeben.

Die Aufgabe wird für eine Anordnung eines Lenkventils mit mindestens einer Überlagerungseinrichtung entsprechend den kennzeichneten Merkmalen des Anspruchs 1 gelöst. Für eine Anordnung eines Lenkventils ohne Zuordnung einer Überlagerungseinrichtung wird die Aufgabe entsprechend Anspruch 5 gelöst.

Hilfskrafteinrichtung mit oder ohne einer oder mehrerer Überlagerungseinrichtungen sind gegenüber dem Lenkgetriebe baulich beabstandet. Zu diesem Zweck ist zwischen Lenkgetriebe und Überlagerungseinrichtung bzw. Hilfskrafteinrichtung ein verbindender Schaft eingesetzt, der den baulichen Abstand ermöglicht und die triebliche Verbindung sichert. Das kann beispielsweise der vom Lenkritzel verlängerte Schaft sein. Die vom Lenkrad kommende Lenksäule ist weiterhin trieblich mit der Hilfskrafteinrichtung bzw. Überlagerungseinrichtung verbunden. Hilfskrafteinrichtung mit oder ohne einer oder mehrerer Überlagerungseinrichtungen bilden baulich ein sogenanntes Lenkmodul. Hilfskrafteinrichtung und Überlagerungseinrichtung können als Lenkmodul karosseriefest an einer Konsole oder an einem starr gelagerten Hilfsrahmen angeordnet sein.

Durch den Entfall des Ventilgehäuses und gegebenenfalls des Gehäuses der Überlagerungseinrichtung unmittelbar am Lenkgehäuse ist eine sehr schlanke Weiterführung des Lenkritzels möglich, so dass mehr Freigang im Bereich des Lenkgetriebes entsteht. Durch die Möglichkeit eines vergrößerten Schwenkwinkel des Ritzels ist es möglich, das Ritzel nun auch in solchen Positionen anzuordnen, die zu einer Verringerung des Gelenkbeugewinkels der Lenksäule führen.

Die Verlagerung der Hilfskrafteinrichtung mit oder ohne einer oder mehrerer Überlagerungseinrichtungen weg vom Lenkgetriebe an eine beabstandete Position, weiter oben in Richtung des Lenkstrangs, erbringt auch den Vorteil, dass nunmehr beim Aufbringen eines Lenkmoments durch den Fahrer die Reibung und das Spiel im Lenkstrang (welches hauptsächlich von den Gelenken in der Lenksäule kommt) nur vom Lenkrad bis zur Überlagerungseinrichtung als Störgröße wirkt. Da Hilfskrafteinrichtung und Überlagerungseinrichtung baulich eine Einheit bilden, könnten sie als sogenanntes Lenkmodul ausgeführt werden, welches als eine einheitliche Baugruppe dann besonders gut montagefähig ist.

Nachfolgende Erfindung wird an einem Ausführungsbeispiel und beiliegenden Zeichnungen erläutert.

Es zeigen
- **Fig. 1**: Lenkgetriebe mit Hilfskrafteinrichtung und einer Überlagerungseinrichtung nach dem **Stand der Technik**
- **Fig. 2**: Lenkgetriebe mit erfindungsgemäßer Anordnung von Hilfskrafteinrichtung und einer Überlagerungseinrichtung im Lenkstrang

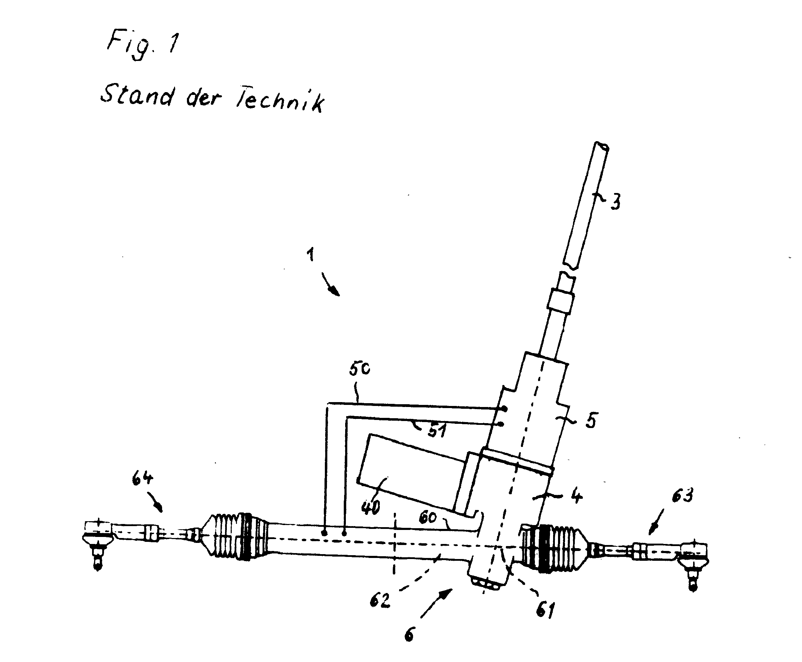

Die in Figur 1 gezeigt Lenkvorrichtung repräsentiert einen bekannten Stand der Technik zur hydraulischen Lenkvorrichtung.
Die gezeigte hydraulische Lenkvorrichtung 1 zeigt die äußere Kontur eines Lenkgetriebes 6. Das Gehäuse des Lenkgetriebes 6 umfasst mehrere Bauteile, die in der Fig.1 nicht sichtbar sind und innerhalb des Gehäuses 60 des Lenkgetriebes 6 angeordnet sind. Das betrifft im Wesentlichen das Lenkritzel 61, welches in Eingriff ist mit der Zahnstange 62. Die Zahnstange 62 hat an jeweils einem Ende eine Zahnstangenanbindung 63 mit Anbindungsgelenk ausgebildet. Am Anbindungsgelenk ist die Spurstange montierbar.
Dem im Aufbau bekannten Lenkgetriebe 6 ist in der Regel eine hydraulische Hilfskrafteinrichtung 5 zugeordnet. Die Hilfskrafteinrichtung kann trieblich direkt mit dem Lenkritzel verbunden sein. Die hydraulische Hilfskrafteinrichtung 5 entspricht dem auch in Fachkreisen verwendeten Begriff eines hydraulischen Lenkventils. Das hydraulische Lenkventil hat einen bekannten Aufbau. Am Gehäuse des hydraulischen Lenkventils sind die hydraulischen Verbindungsleitungen 50, 51 zwischen Lenkventil und Lenkgetriebe dargestellt.

Das hydraulische Lenkventil 5 ist mit der Lenksäule 3 trieblich verbunden, wobei das am anderen Ende der Lenksäule 3 befestigte Lenkrad nicht dargestellt ist. Diese serielle Anordnung der Bauteile Lenkrad, Lenksäule, Lenkventil und Lenkgetriebe bilden den sogenannten Lenkstrang.
Im vorliegenden Beispiel ist nach Fig.1 im Lenkstrang zwischen Lenkventil 5 und Lenkritzel 61 noch eine Überlagerungseinrichtung 4 angeordnet. Das betrifft einen Lenkwinkelsteller. Dieser ist beispielsweise aus einem Planetengetriebe mit einem Elektromotor 40 ausgebildet sowie einer Antriebsschnecke und Messsensoren. Mittels der Überlagerungseinrichtung 4 wird es möglich einen zusätzlichen Lenkwinkel dem Lenkwinkel des Fahrers bei der Betätigung des Lenkrads zu überlagern.
Beide Möglichkeiten werden durch die Erfindung verbessert.

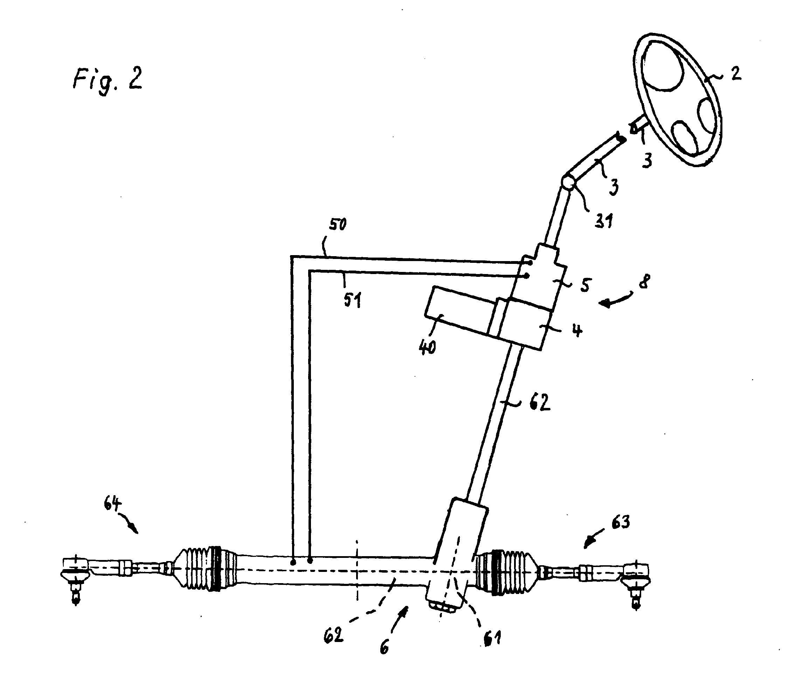

Ausgehend von diesem Stand der Technik zeigt **Figur 2,** dass das Lenkventil 5 nicht mehr direkt am Lenkgetriebe 6 befestigt ist, sondern baulich beabstandet gegenüber dem Lenkgetriebe 6 im Lenkstrang angeordnet ist. Da das Lenkventil in der Regel mit mindestens einer Hilfskrafteinrichtung verbunden ist, bilden beide eine bauliche Einheit, ein sogenanntes Lenkmodul 8. Neben dem Lenkwinkelsteller als Überlagerungseinrichtung ist auch wahlweise die Anordnung einer weiteren Überlagerungseinrichtung, eines sogenannten Momentenstellers, möglich. Der Momentensteller ist dann innerhalb des Lenkstrangs oberhalb des hydraulischen Lenkventils 5 angeordnet und bewirkt eine Verstärkung des Drehmoments beim Lenken. Das hydraulische Lenkventil 5 mit Überlagerungseinrichtung 4 als sogenanntes Lenkmodul 8 ist entlang der Lenkstrangs in Richtung Lenkrad 2 verlagert.
Hierdurch wird im Grunde die ursprüngliche Lenksäule 3 verkürzt und im Gegenzug die Lenkritzelwelle 62 verlängert. Da die Ritzelwelle einen kleineren Durchmesser hat als das Lenkventil mit Überlagerungseinrichtung, ist somit mehr Platz im Bereich des Lenkgetriebes 6 vorhanden. In dem entstandenen Freiraum könnte der Schwenkwinkel für die Ritzelwelle vergrößert werden, so dass der oder die Beugewinkel der Lenksäule 3 optimiert werden können.

Durch die Verlagerung von Lenkventil 5 und Überlagerungseinrichtung 4 sind diese im Lenkstrang an einer wählbaren Position anordenbar.
Fig.2 zeigt die Verlagerung des Lenkmoduls 8 bis unterhalb des Winkelgelenks 31 der Lenksäule 3. Es ist aber auch realisierbar, das Lenkmodul 8 oberhalb des Winkelgelenks 31, weiter in Richtung Lenkrad 2, in der Lenksäule 3 anzuordnen.
Vorzugsweise wird das Lenkmodul 8 auf einer Konsole oder dergleichen am Längsträger, respektive Stimwand oder in unmittelbarer Umgebung dieser Bauteile positioniert, aber in jedem Falle karosseriefest befestigt.
Lenkventil mit oder ohne einer oder mehrerer Überlagerungseinrichtungen können so im Lenkstrang positioniert werden, dass die Übertragung der Reibung und des Spiels im Lenkstrang an den Fahrer minimiert wird.
Die Erfindung ist auch ausführbar, wenn keine Überlagerungsvorrichtung im Lenkstrang existiert , sondern nur das Lenkventil, welches allein im Lenkstrang auf die beschriebene Weise gegenüber dem Lenkgetriebe beabstandet anzuordnen ist.

## Patentansprüche

1. Hydraulische Lenkvorrichtung für ein Kraftfahrzeug, bestehend aus einer mit dem Lenkrad verbundenen Lenksäule, welche mittels hydraulischer Hilfskrafteinrichtung und mindestens einer Überlagerungseinrichtung mit einem hydraulischem Lenkgetriebe trieblich verbunden ist, welches ein mit einer Zahnstange in Eingriff angeordnetes Zahnritzel besitzt, **dadurch gekennzeichnet, dass** Hilfskrafteinrichtung (5) und Überlagerungseinrichtung (4) baulich beabstandet gegenüber dem Lenkgetriebe (6) in der Lenksäule (3) angeordnet sind.

2. Hydraulische Lenkvorrichtung für ein Kraftfahrzeug gemäss Anspruch 1, **dadurch gekennzeichnet, dass** Hilfskrafteinrichtung (5) und mindestens eine Überlagerungseinrichtung (4) ein zwischen Lenksäulenabschnitten angeordnetes Lenkmodul (8) bilden.

3. Hydraulische Lenkvorrichtung für ein Kraftfahrzeug gemäss Anspruch 1 ,
**dadurch gekennzeichnet, dass** Hilfskrafteinrichtung (5) und/oder Überlagerungseinrichtung (4) karosseriefest an einer Konsole oder an einem starr gesetzten Hilfsrahmen angeordnet ist.

4. Hydraulische Lenkvorrichtung für ein Kraftfahrzeug gemäss Anspruch 1 **,dadurch gekennzeichnet, dass** die Hilfskrafteinrichtung (5) und mindestens eine Überlagerungseinrichtung (4) im Lenkstrang oberhalb eines Winkelgelenks (31) mit der Lenksäule (3) verbunden sind.

5. Hydraulische Lenkvorrichtung für ein Kraftfahrzeug , bestehend aus einer mit dem Lenkrad verbundenen Lenksäule, welche mittels hydraulischer Hilfskrafteinrichtung mit einem hydraulischen Lenkgetriebe trieblich verbunden ist, welches ein mit einer Zahnstange in Eingriff angeordnetes Zahnritzel besitzt, **dadurch gekennzeichnet, dass** die Hilfskrafteinrichtung (4) baulich beabstandet gegenüber dem Lenkgetriebe (6) in der Lenksäule (3) angeordnet ist.
